# EUROPÄISCHE PATENTSCHRIFT

(11) **EP 2 861 899 B1**
(45) Veröffentlichungstag und Bekanntmachung des Hinweises auf die Patenterteilung: **17.10.2018**
(21) Anmeldenummer: 13727573.1
(22) Anmeldetag: 31.05.2013
(51) Int. Cl.: F24S 10/90, F24S 50/40, F16K 15/14, F24S 90/10, F24S 60/30, F16K 31/00

(54) **NACH DEM THERMOSIPHON-PRINZIP ARBEITENDE SOLARKOLLEKTOREINRICHTUNG**
SOLAR COLLECTOR DEVICE WHICH OPERATES ACCORDING TO THE THERMOSIPHON PRINCIPLE
DISPOSITIF DE CAPTEUR SOLAIRE FONCTIONNANT SELON LE PRINCIPE DU THERMOSIPHON

(30) Priorität: 18.06.2012 DE 102012011961
(43) Veröffentlichungstag der Anmeldung: 22.04.2015
(73) Patentinhaber: Robert Bosch GmbH, 70442 Stuttgart (DE)
(72) Erfinder: CLEMENT, Uwe, 73114 Schlat (DE)
(86) Internationale Anmeldenummer: PCT/EP2013/061235
(87) Internationale Veröffentlichungsnummer: WO 2013/189717

(56) Entgegenhaltungen:
- EP-A1- 2 056 039
- WO-A1-2004/070125
- WO-A1-2009/113954
- AT-B- 388 232
- DE-A1- 3 618 301
- US-A- 3 159 176
- US-A- 3 705 685
- US-A- 4 314 667
- US-A- 4 409 959
- US-A1- 2006 237 184

## Beschreibung

Die Erfindung betrifft eine nach dem Thermosiphon-Prinzip arbeitender Solarkollektoreinrichtung nach dem Oberbegriff des Patentanspruches 1. Solarkollektoreinrichtungen basierend auf einem Thermosiphonprinzip dienen zur Wärmegewinnung aus Sonnenenergie durch eine passive natürliche Konvektion in einem Fluidkreislauf.
Eine derartige auch als Thermosiphonkollektor bezeichnete Solarkollektoreinrichtung umfasst typischerweise einen wenigstens teilweise geodätisch oberhalb eines Solarkollektors angeordneter Fluidspeicher. Letzterer hat eine geodätisch unten angeordnete Entnahmestelle und eine geodätisch oben angeordnete Einspeisestelle. Der Solarkollektor weist einen Durchflusskanal mit einer Eingangsöffnung und einer geodätisch höher als diese liegende Ausgangsöffnung auf. Die Eingangsöffnung des Solarkollektors ist über eine Rücklaufleitung mit der Entnahmestelle des Fluidspeichers hydraulisch verbunden. Zudem ist die Ausgangsöffnung des Solarkollektors über eine Vorlaufleitung mit der Einspeisestelle des Fluidspeichers hydraulisch verbunden, so dass ein Fluidkreislauf ausgebildet ist.
Eine konventionelle Pumpe ist zum Betrieb nicht erforderlich. Vielmehr wird die unterschiedliche relative Dichte des Fluids bei unterschiedlichen Temperaturen genutzt, um den Fluidkreislauf anzutreiben. In dem Solarkollektor erhitztes Fluid steigt aufgrund seiner geringeren Dichte durch die Vorlaufleitung in den Fluidspeicher auf, während gleichzeitig kälteres Fluid durch die Rücklaufleitung abwärts zum Solarkollektor sinkt.
Zur Entladung von Wärme aus dem Fluidspeicher kann entweder ein Wärmetauscher vorgesehen sein, oder aber das Fluid selbst wird entnommen und nachgefüllt. In letztem Falle mündet eine Speiseleitung typischerweise in den unteren Bereich des Fluidspeichers oder die Rücklaufleitung. Eine Entnahmeleitung ist mit dem oberen Bereich des Fluidspeichers verbunden.

Bedingt durch kühle äußere Einflüsse auf den Solarkollektor, zum Beispiel durch kühle Nächte oder Regen, kann der Fall eintreten, dass das im Solarkollektor bzw. im Durchflusskanal befindliche Fluid kühler ist als die Temperatur des auf gleicher Höhe angeordneten Fluids im Speicher. Dann kehrt sich die natürliche Konvektion um und der Fluidspeicher wird entladen, d. h. er verliert Wärme. Um dies zu vermeiden, werden im Stand der Technik Rückschlagventile eingesetzt, die eine Konvektionsströmung in dieser Zirkulationsrichtung unterbinden. Bekannte Rückschlagventile sind als Rückschlagklappe oder Duckbill-Ventil ausgeführt.
Duckbill-Ventile sind meist aus Gummi, Elastomeren oder Silikon hergestellt und innerhalb eines Rohrabschnitts angeordnet. Sie weisen einen sich von einer Eingangsöffnung zu einer Ausgangsöffnung verjüngenden Querschnitt auf, der von einem im Rohrabschnitt angeordneten elastischen Mantel begrenzt ist. Aus Richtung der Eintrittsöffnung kommend, hat solch ein Duckbill-Ventil einen geringen Strömungswiderstand, da die Austrittsöffnung durch den von Innen auf den Mantel wirkenden Strömungsdruck geweitet wird. Dahingegen ist der Strömungswiderstand aus Richtung der Austrittsöffnung kommend relativ groß, weil die Austrittsöffnung dann durch den von außen auf den Mantel wirkenden Strömungsdruck verkleinert wird.
Probleme treten in der Praxis bei gattungsgemäßen Solarsystemen insbesondere während des sogenannten Stagnationsfalles auf. In einem solchen wird keine Wärme aus dem Fluid entladen und die solare Wärme kann das Fluid nicht weiter erwärmen, so dass der Konvektionsstrom stoppt. Die Temperatur liegt hierbei im gesamten Fluidvolumen oftmals deutlich über 70 Grad Celsius. Da Thermosiphonkollektoren insbesondere in Schwellen- und Entwicklungsländern eingesetzt werden, ist eine kostengünstige Herstellung gefordert. Hierfür eingesetzte Materialien, insbesondere Kunststoffe wie Polyethylen (PE) und Polypropylen (PP), können bei derart hohen Temperaturen jedoch schnell altern und Schaden nehmen.
Daher versucht man im Stand der Technik, die Temperatur des Fluids auf unter 60 bis 65 Grad Celsius zu halten. Bekannte Lösungen sind zum Beispiel Bimetallstreifen, welche eine Belüftung zwischen dem Durchflusskanal und einer Absorberplatte des Solarkollektors regulieren. Die hierfür notwendigen Belüftungsöffnungen können jedoch durch falsche Montage versperrt sein oder aber es kann zu deren Blockade durch Umwelteinflüsse kommen.

Die AT 388232 B offenbart eine Anlage und einen Speicher zur Warmwasserbereitung mittels Sonnenenergie, wobei ein Wärmeträgermedium in wenigstens einem Kollektor erwärmt wird und in einem geschlossenen Kreislauf zwischen Kollektor und Wärmetauscher umläuft, wobei von dem wenigstens einen Kollektor je eine Zufuhr- und Abfuhrleitung zu verschiedenen Zonen eines Speichers führen.
Der Erfindung liegt daher die Aufgabe zugrunde, die Probleme des Standes der Technik zu überwinden und eine Lösung zu finden, die es erlaubt, Schäden durch Überhitzung an einer nach dem Thermosiphon-Prinzip arbeitenden Solarkollektoreinrichtung mit natürlichem Konvektionskreislauf zu vermeiden und zudem kostengünstig, zuverlässig im Betrieb sowie einfach montierbar ist.
Erfindungsgemäß wird dies mit den Merkmalen des Patentanspruchs 1 gelöst. Vorteilhafte Weiterbildungen sind den Unteransprüchen zu entnehmen.
Die Erfindung betrifft eine nach dem Thermosiphon-Prinzip arbeitende Solarkollektoreinrichtung mit einem Fluidkreislauf umfassend: einen Solarkollektor mit einem Durchflusskanal, der eine Eingangsöffnung und eine geodätisch höher als die Eingangsöffnung liegende Ausgangsöffnung aufweist; einen Fluidspeicher mit einer Entnahmestelle und einer geodätisch höher als die Entnahmestelle angeordneten Einspeisestelle, wobei der Fluidspeicher wenigstens teilweise geodätisch oberhalb des Solarkollektors angeordnet ist; eine Rücklaufleitung, welche die Eingangsöffnung des Durchflusskanals mit der Entnahmestelle des Fluidspeichers hydraulisch verbindet; und eine Vorlaufleitung, welche die Ausgangsöffnung des Durchflusskanals mit der Einspeisestelle des Fluidspeichers hydraulisch verbindet, weiter umfassend ein Ventil mit einem sich in Längsrichtung von einer Eintrittsöffnung zu einer Austrittsöffnung verjüngenden Mantel, wobei der Mantel ein elastisches Material aufweist, so dass die Austrittsöffnung elastisch verformbar ist, wobei innerhalb dessen ein erster Strömungsraum ausgebildet ist, der sich in Längsrichtung über die Eintrittsöffnung hinaus erstreckt, und außerhalb dessen ein zweiter Strömungsraum ausgebildet ist, der sich in Längsrichtung über die Austrittsöffnung hinaus erstreckt, wobei der erste Strömungsraum und der zweite Strömungsraum über die Austrittsöffnung sowie wenigstens einen ersten Bypass mit einem ersten Bypassventil strömungsverbindbar sind, wobei das erste Bypassventil temperaturgesteuert ist, und wobei die Eintrittsöffnung des Ventils in Strömungsrichtung der Entnahmestelle und die Austrittsöffnung des Ventils in Strömungsrichtung der Einspeisestelle weist.
Vorteilhaft ist die kostengünstige und robuste Gestaltung eines solchen Bypassventils, welches installiert in eine Solarkollektoreinrichtung eine Umkehrung der Zirkulationsrichtung bei einem Überschreiten einer Grenztemperatur ermöglicht. Hierdurch ist die Temperatur des Fluids unterhalb einer kritischen Grenze haltbar und thermisch bedingte Schäden an der Solarkollektoreinrichtung werden vermieden. So wird das Fluid innerhalb der Solarkollektorvorrichtung beispielsweise nachts wieder soweit abgekühlt, dass eine kritische Temperatur bei der nächsten Sonnenphase nicht überschritten wird. Die Gefahr einer Falschmontage ist äußerst gering und im Zweifel durch eine fehlende Funktionalität der Solarkollektoreinrichtung schnell feststellbar. Außerdem haben Umwelteinflüsse nahezu kein Störpotential, da das Ventil im Fluidkreislauf gekapselt ist. Ein weiterer Vorteil ist die einfache Nachrüstbarkeit.
In einer Weiterentwicklung der Solarkollektoreinrichtung ist das Ventil in der Durchflussleitung oder der Vorlaufleitung angeordnet. Ersteres ermöglicht beispielsweise die Auslieferung eines Solarkollektors mit bereits integriertem Ventil. Dahingegen gestaltet sich die Integration und Nachrüstung eines Ventils in bestehende Solarkollektoreinrichtungen bei einer Anordnung in der Vorlaufleitung besonders einfach.

Gemäß der Erfindung weist der Mantel ein elastisches Material auf. Aus Richtung der Eintrittsöffnung kommend, hat ein Ventil mit solch einem elastischen Mantel einen geringen Strömungswiderstand, da die Austrittsöffnung durch den von Innen auf den Mantel wirkenden Strömungsdruck geweitet wird. Dahingegen ist der Strömungswiderstand aus Richtung der Austrittsöffnung kommend relativ groß, weil die Austrittsöffnung dann durch den von außen auf den Mantel wirkenden Strömungsdruck verkleinert wird. Der Vorteil ist, dass nahezu keine beweglichen Teile vorhanden sind, wodurch das Ventil robust gegen Festsitzen ist.
Zu bevorzugen ist dabei eine Gestaltung des Mantels, bei der die Eintrittsöffnung rund ist, da auch die Leitungen des Fluidkreislaufs typischerweise einen runden Querschnitt haben. Entsprechend kann sich die Eintrittsöffnung über den gesamten Querschnitt der Leitung erstrecken und der Strömungswiderstand ist gering. Dadurch wird die natürliche Konvektion geringstmöglich behindert.
Gemäß der Erfindung sind der erste Strömungsraum und der zweite Strömungsraum über die Austrittsöffnung strömungsverbindbar. Entsprechend kann das Ventil eine natürliche Konvektion durch die Austrittsöffnung hindurch zulassen oder unterbinden. Bevorzugt ist die Austrittsöffnung geöffnet, wenn ein Druck im ersten Strömungsraum um einen ersten Differenzdruck größer ist als ein Druck im zweiten Strömungsraum. Dahingegen sollte die Austrittsöffnung geschlossen sein, wenn ein Druck im ersten Strömungsraum um einen zweiten Differenzdruck geringer ist als ein Druck im zweiten Strömungsraum. Der erste und zweite Differenzdruck können dabei den gleichen Wert haben. Insbesondere der zweite Differenzdruck kann jedoch auch geringfügig negativ sein, so dass die Austrittsöffnung erst freigegeben wird, wenn ein hinreichend großer Druckdifferenz besteht. Durch bistabile Federelemente könnte zudem ein ständiges Hin- und Herstellen des Ventils im Grenzfall vermieden werden. Hierdurch ist der Strömungswiderstand besonders gering, sobald die Austrittsöffnung einmal geöffnet ist. Geschlossen wird das Ventil dann erst, wenn eine hinreichende Rückwärtsströmung vorliegt.
Zu bevorzugen ist weiterhin eine Ausgestaltung des Mantels derart, dass die Austrittsöffnung rechteckig oder schlitzförmig ist. Schon ein geringfügig größerer Druck im ersten Strömungsraum als im zweiten Strömungsraum kann dann eine deutliche Aufweitung der Austrittsöffnung bewirken. Auch hierdurch ist der Strömungswiderstand des Ventils klein.
Die Erfindung sieht vor, dass das erste Bypassventil temperaturgesteuert ist. Bei Erreichen einer bestimmten Grenztemperatur wird das Bypassventil dann freigegeben. Auf diese Weise ist es möglich, eine Rückwärtsströmung des Fluidkreislaufs einer Solarkollektorvorrichtung bei Überschreiten einer Grenztemperatur freizugeben. Anschließend erfolgt eine Wärmeabgabe vom Fluid an die Umgebung und die Temperatur des Fluids kann auf einen Wert unterhalb eines Grenzwerts abgesenkt werden.
Gemäß einer besonders vorteilhaften Ausgestaltung der Erfindung ist das erste Bypassventil ein Bimetall, das den ersten Bypass bei einer Temperatur unterhalb einer ersten Grenztemperatur verschließt, und das den ersten Bypass bei einer Temperatur oberhalb einer zweiten Grenztemperatur wenigstens teilweise freigibt. Das Bimetall kann unmittelbar im Fluidkreislauf angeordnet werden und setzt die Schalttemperaturen entsprechend genau und völlig autark um. Dies ist besonders preiswert und zuverlässig.
In einer Weiterentwicklung der Erfindung sind die Grenztemperaturen durch Auslegung des Bimetalls definiert. Hierdurch lassen sich die Grenztemperaturen an die Umweltfaktoren und die Solarkollektoreinrichtung, insbesondere an deren Materialien, anpassen. Dabei können sich die erste und zweite Grenztemperatur entsprechen. Alternativ kann das Bimetall auch bistabil ausgebildet sein, sodass es bei Durchschreiten einer Grenztemperatur eine verhältnismäßig große Bewegung durchführt.
Ferner sieht eine Variante der Erfindung vor, dass der erste Bypass durch eine Öffnung im Mantel ausgebildet ist. Hierdurch ist der Aufbau des Ventils besonders einfach und kompakt. Die Öffnung ist dann bevorzugt in einem unflexiblen Bereich des Mantels angeordnet, um das erste Bypassventil kostengünstig und einfach gestalten zu können. Alternativ kann die Öffnung auch in einem anderen, insbesondere unabhängig von dem Mantel ausgebildeten Trennelement zwischen dem ersten und zweiten Strömungsraum ausgebildet sein. Optional wäre auch eine Ausbildung des ersten Bypasses durch einen Leitungsabschnitt möglich. Ein Vorteil hierbei wäre die nachträgliche Integration eines solchen Bypasses in einer bestehenden Solarkollektoreinrichtung mit Rückschlagventil. Das Rückschlagventil würde dann nachträglich mit dem Bypass überbrückt.
Die Erfindung ist nicht auf die Ausbildung eines einzigen Bypasses beschränkt. Vielmehr können der erste Strömungsraum und der zweite Strömungsraum gemäß einer Weiterbildung auch über zwei bis zehn Bypässe strömungsverbunden sein, wobei in jedem dieser Bypässe ein Bypassventil angeordnet ist. Die Merkmale der Bypässe und der Bypassventile können dabei gleichermaßen wie die des ersten Bypasses und des ersten Bypassventils ausgestaltet sein. Denkbar sind jedoch auch nur einzeln ausgewählte und damit übereinstimmende Merkmale. Vorteilhaft an einer Erhöhung der Anzahl an Bypassventilen ist, dass ein größerer kumulierter Bypassquerschnitt bei möglichst kompakter Bauweise des Ventils erzielbar ist. So lässt die geometrische Gestaltung des Mantels beispielsweise nur bedingt große Öffnungen zu, was jedoch durch die Erhöhung der Anzahl der Öffnungen ausgeglichen werden kann.
Ein solches erfindungsgemäßes Ventil kann unmittelbar in einen Rohrabschnitt eingesetzt werden. Bevorzugt weist das Ventil jedoch einen eigenen rohrförmigen Ventilkörper auf. Besonders bevorzugt umfasst der Ventilkörper hierbei den Mantel radial zur Längsrichtung. Hierdurch ist die Installation besonders einfach und fehlerfrei durchführbar, da nur Rohrabschnitte miteinander verbunden werden müssen. Weiterhin sollte der zweite Strömungsraum vom Ventilkörper begrenzt sein. Hierdurch wird der Mantel insbesondere beim Transport und der Handhabung vor Beschädigungen geschützt. Auch der erste Strömungsraum sollte vom Ventilkörper begrenzt sein. Hierdurch kann insbesondere die Eintrittsöffnung des Mantels geschützt werden.
Mithin ist es möglich, eine natürliche Konvektion von Fluid im Fluidkreislauf in Richtung der Einspeisestelle freizugeben und in umgekehrter Richtung entweder zu sperren oder bei einem Überschreiten einer Grenztemperatur freizugeben. Vorteilhaft ist die kostengünstige und robuste Gestaltung der Solarkollektoreinrichtung mit einem solchen Bypassventil. Hierdurch ist die Temperatur des Fluids unterhalb einer kritischen Grenze haltbar und thermisch bedingte Schäden werden vermieden. So wird das Fluid innerhalb der Solarkollektorvorrichtung beispielsweise nachts wieder soweit abgekühlt, dass eine kritische Temperatur bei der nächsten Sonnenphase nicht überschritten wird. Die Gefahr einer Falschmontage ist äußerst gering und im Zweifel durch eine fehlende Funktionalität der Solarkollektoreinrichtung schnell feststellbar. Außerdem haben Umwelteinflüsse nahezu kein Störpotential, da das Ventil im Fluidkreislauf gekapselt ist. Ein weiterer Vorteil ist die einfache Nachrüstbarkeit. Der Bypass und das Bypassventil können dabei gemäß den zuvor beschriebenen Ausgestaltungsmöglichkeiten spezifiziert sein.
Gemäß einer Fortentwicklung der Solarkollektoreinrichtung ist die Entnahmestelle im geodätisch unteren Bereich des Fluidspeichers angeordnet. Entsprechend wird bei einer Beladung des Fluidspeichers möglichst kaltes Fluid zum Solarkollektor geführt und die Wärmegewinnung ist besonders hoch.

Weiterhin ist es zu bevorzugen, die Einspeisestelle im geodätisch oberen Bereich des Fluidspeichers anzuordnen. Auf diese Weise wird die Entladung durch Rückwärtszirkulation unterstützt, da gerade das heißeste oben eingeschichtete Fluid abgezogen und gekühlt wird. Zudem wird bei der Beladung des Fluidspeichers keine Durchmischung des Fluids im Fluidspeicher verursacht, so dass dem Solarkollektor möglichst kaltes Fluid zugeführt wird. Außerdem wird die natürliche Konvektion im Fluidkreislauf geringstmöglich behindert. Aus gleichem Grunde ist die Einspeisestelle bevorzugt geodätisch oberhalb der Ausgangsöffnung des Durchflusskanals des Solarkollektors angeordnet.
Eine wichtige Variante der Erfindung betrifft eine direkte Entnahme von Fluid aus dem Fluidspeicher, wie es bei der Brauchwassernutzung von Vorteil ist. Hierfür sollte eine Speiseleitung in den unteren Bereich des Fluidspeichers oder in die Rücklaufleitung münden. Entsprechend wird kaltes neu eingespeistes Fluid entweder im unteren Bereich des Fluidspeichers eingeschichtet oder aber direkt zum Solarkollektor geführt. Eine Verbraucherleitung ist besonders bevorzugt mit dem oberen Bereich des Fluidspeichers strömungsverbunden. Von hier aus kann auf einfache Art und Weise warmes Fluid abgezapft werden.

Die Zeichnungen stellen Ausführungsbeispiele der Erfindung dar und zeigen in
- Fig. 1: eine schematisch dargestellte Solarkollektoreinrichtung,
- Fig. 2: einen Längsschnitt durch ein geöffnetes Ventil mit einem geschlossenem Bypassventil,
- Fig. 3: einen Längsschnitt durch ein geschlossenes Ventil mit einem geschlossenem Bypassventil,
- Fig. 4: einen Längsschnitt durch ein geschlossenes Ventil mit einem geöffnetem Bypassventil, und
- Fig. 5: einen Querschnitt durch ein Ventil mit vier Bypassventilen.

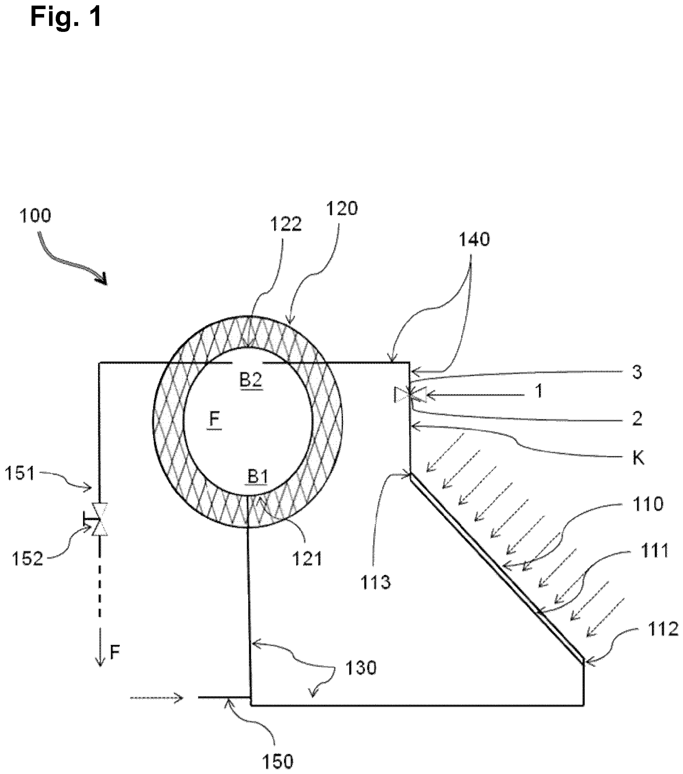

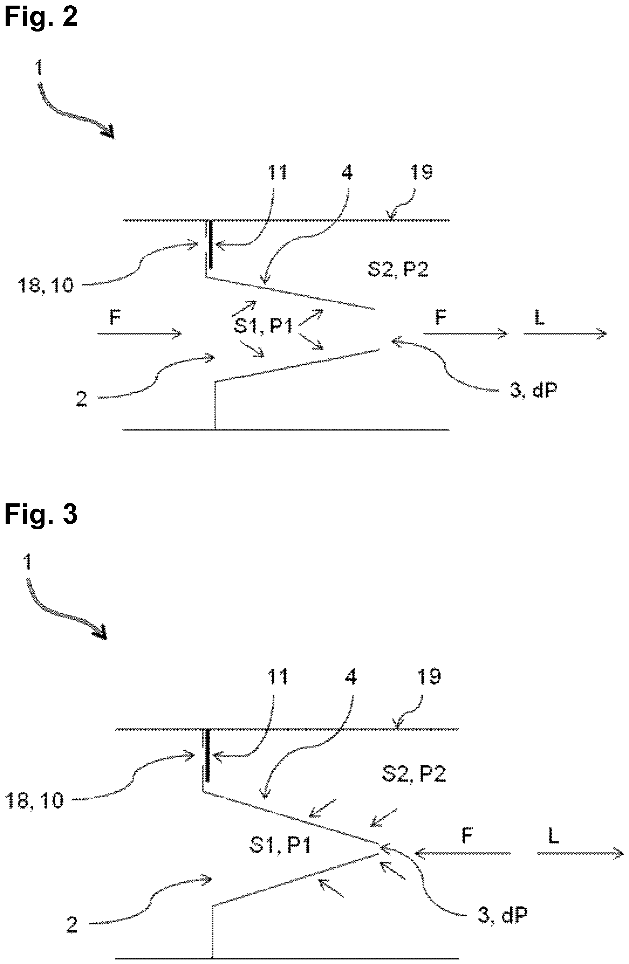

Fig. 1 zeigt eine schematisch dargestellte Solarkollektoreinrichtung 100. Diese hat einen Fluidkreislauf K umfassend einen Solarkollektor 110 mit einem Durchflusskanal 111, der eine Eingangsöffnung 112 und eine geodätisch höher als die Eingangsöffnung 112 liegende Ausgangsöffnung 113 aufweist. Zudem umfasst der Fluidkreislauf K einen Fluidspeicher 120 mit einer Entnahmestelle 121 und einer geodätisch höher als die Entnahmestelle 121 angeordneten Einspeisestelle 122. Insbesondere ist die Entnahmestelle 121 im geodätisch unteren Bereich B1 des Fluidspeichers 120 angeordnet. Dahingegen befindet sich die Einspeisestelle 122 im geodätisch oberen Bereich B2 des Fluidspeichers 120. Dabei ist die Einspeisestelle 122 geodätisch oberhalb der Ausgangsöffnung 113 des Durchflusskanals 111 des Solarkollektors 110 angeordnet. Gleichzeitig ist der Fluidspeicher 120 teilweise, insbesondere ungefähr zu zwei Dritteln, geodätisch oberhalb des Solarkollektors 110 angeordnet.
Eine Rücklaufleitung 130 des Fluidkreislaufs K verbindet die Eingangsöffnung 112 des Durchflusskanals 111 mit der Entnahmestelle 121 des Fluidspeichers 120 hydraulisch. Die Ausgangsöffnung 113 des Durchflusskanals 111 ist wiederum mittels einer Vorlaufleitung 140 mit der Einspeisestelle 122 des Fluidspeichers 120 hydraulisch verbunden. In dieser Vorlaufleitung 140 ist ein Ventil 1 angeordnet, dessen nähere Ausgestaltung beispielsweise in den Fig. 2 bis 5 näher beschrieben ist. Die Ausrichtung des Ventils 1 ist so gewählt, dass dessen Eintrittsöffnung 2 in Strömungsrichtung der Entnahmestelle 121 und dessen Austrittsöffnung 3 in Strömungsrichtung der Einspeisestelle 122 weist.
Schließlich mündet noch eine Speiseleitung 150 in die Rücklaufleitung 130. Gleichzeitig ist eine Verbraucherleitung 151 mit dem oberen Bereich B2 des Fluidspeichers 120 strömungsverbunden. Durch Öffnen eines Verbraucherventils 152 in der Verbraucherleitung 151 kann nunmehr Fluid F aus dem Fluidspeicher 120 entnommen werden. Diese entnommene Fluidmenge wird durch Fluid F aus der Speiseleitung 150 ergänzt.
Die Fig. 2 bis 4 zeigen jeweils einen Längsschnitt durch ein Ventil 1 umfassend einen ersten Bypass 10 mit einem ersten Bypassventil 11. Diese Ventile 1 eignen sich insbesondere für nach dem Thermosiphon-Prinzip arbeitende Solarkollektoreinrichtungen, wie beispielsweise in Fig. 1 gezeigt.
Jedes der Ventile 1 hat einen sich in Längsrichtung L von einer Eintrittsöffnung 2 zu einer Austrittsöffnung 3 verjüngenden Mantel 4. Innerhalb des Mantels 4 ist ein erster Strömungsraum S1 ausgebildet, der sich in Längsrichtung L über die Eintrittsöffnung 2 hinaus erstreckt. Außerhalb des Mantels 4 ist ein zweiter Strömungsraum S2 ausgebildet, der sich in Längsrichtung L über die Austrittsöffnung 3 hinaus erstreckt. Der Mantel 4 weist ein elastisches Material auf, sodass insbesondere die Austrittsöffnung 3 elastisch verformbar ist. Auf diese Weise sind der erste Strömungsraum S1 und der zweite Strömungsraum S2 über die Austrittsöffnung 3 strömungsverbindbar.
Das Ventil 1 weist weiterhin einen rohrförmigen Ventilkörper 19 auf. Dieser umfasst den Mantel 4 radial zur Längsrichtung L und begrenzt sowohl den ersten Strömungsraum S1 als auch den zweiten Strömungsraum S2.
Neben der Verbindung über die Austrittsöffnung 3 sind der erste Strömungsraum S1 und der zweite Strömungsraum S2 über einen ersten Bypass 10 mit einem ersten Bypassventil 11 strömungsverbindbar. Wie man erkennt, ist der erste Bypass 10 durch eine Öffnung 18 ausgebildet, insbesondere durch eine Öffnung 18 im Mantel 4.

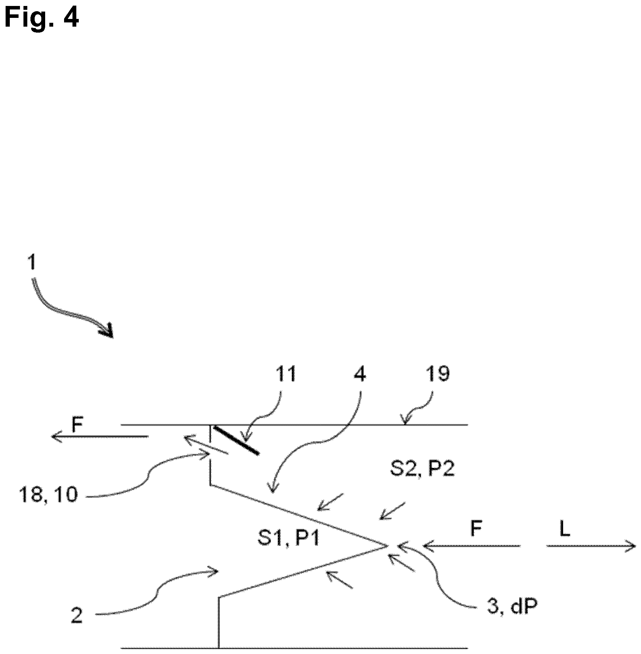

Das erste Bypassventil 11 ist temperaturgesteuert. Erreicht wird dies dadurch, dass das erste Bypassventil 11 ein Bimetall ist, das den ersten Bypass 10 bei einer Temperatur unterhalb einer ersten Grenztemperatur verschließt, und das den ersten Bypass 10 bei einer Temperatur oberhalb einer zweiten Grenztemperatur wenigstens teilweise freigibt. Die Grenztemperaturen sind durch Auslegung des Bimetalls definiert.
Im ersten Strömungsraum S1 der Ventile 1 herrscht jeweils ein Druck P1 und im zweiten Strömungsraum S2 ein Druck P2. Hieraus ergibt sich im Bereich der Austrittsöffnung 3 eine Druckdifferenz dP.
Gemäß Fig. 2 strömt Fluid F, bspw. durch natürliche Konvektion, von der Eintrittsöffnung 2 in Richtung der Austrittsöffnung 3. Aufgrund des Strömungsdrucks und einer temperaturbedingten Gewichtsdifferenz ist der Druck P1 im ersten Strömungsraum S1 um eine Druckdifferenz dP größer als der Druck P2 im zweiten Strömungsraum S2. Die hierdurch von innen auf den Mantel 4 wirkende Kraft weitet die Austrittsöffnung 3, sodass das Fluid F das Ventil 1 problemlos durchströmen kann. Die Stellung des ersten Bypassventils 11 ist hierbei für die Funktion von nebengeordneter Bedeutung. Gezeigt ist hier allerdings eine geschlossene Stellung, da ein geöffnetes Bypassventil 11 auf eine zu hohe Temperatur des Fluids F hinweisen würde obwohl dieses immer noch weiter erwärmt wird. Gerade eine solche Überwärmung soll mit dem Ventil 1 jedoch vermieden werden.
In Fig. 3 ist der Druck P1 im ersten Strömungsraum S1 hingegen um eine Druckdifferenz dP geringer als der Druck P2 im zweiten Strömungsraum S2. Durch die nunmehr wirkende Kraft von außen auf den Mantel 4 wird die Austrittsöffnung 3 verjüngt, insbesondere geschlossen. Es kann folglich kein Fluid F durch die Austrittsöffnung 3 kommend in Richtung der Eintrittsöffnung 2 strömen. Aufgrund einer Unterschreitung einer Grenztemperatur ist auch das erste Bypassventil 11 geschlossen. Folglich besteht keinerlei Strömungsverbindung zwischen dem ersten Strömungsraum S1 und dem zweiten Strömungsraum S2 über das Ventil 1. Eine Entladung einer Solarkollektoreinrichtung 100 durch eine ungewollte konvektionsbedingte Rückwärtszirkulation wird so unterbunden.
Abweichend zu Fig. 3 zeigt Fig. 4 eine Überschreitung der Grenztemperatur des Fluids F. Hierdurch ist das temperaturgesteuerte Bypassventil 11 in eine geöffnete Stellung gebracht. Obwohl der Druck P2 im Strömungsraum S2 hier größer ist als der Druck P1 im ersten Strömungsraum S1, wodurch vor allem die Austrittsöffnung 3 geschlossen ist, wird hier bewusst eine Entladung einer Solarkollektoreinrichtung 100 durch eine zugelassene konvektionsbedingte Rückwärtszirkulation durch den ersten Bypass 10 erlaubt.

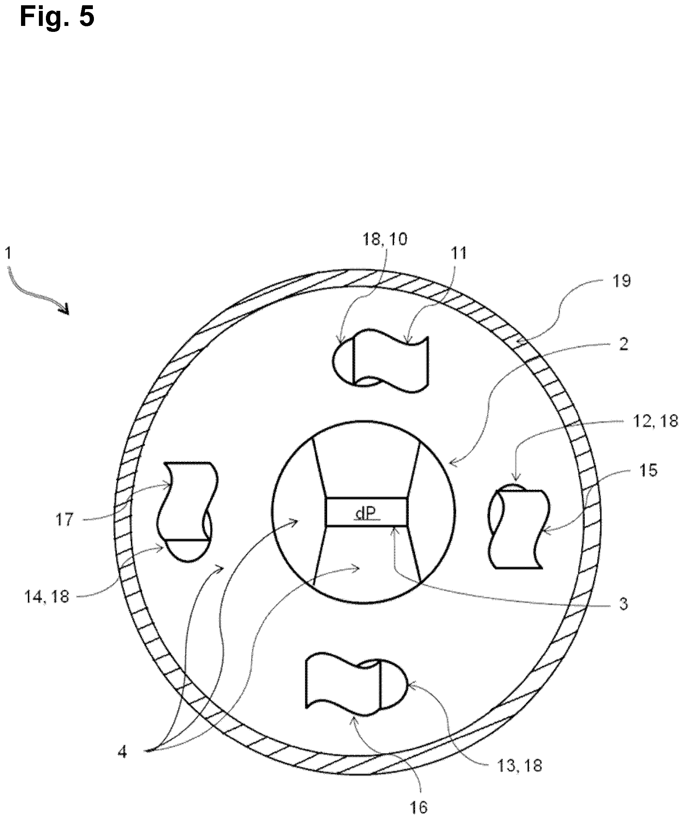

Fig. 5 zeigt einen Querschnitt durch ein Ventil 1 umfassend vier Bypässe 10, 12, 13, 14 mit vier Bypassventilen 11, 15, 16, 17. Auch dieses Ventil 1 eignet sich insbesondere für nach dem Thermosiphon-Prinzip arbeitende Solarkollektoreinrichtungen, wie beispielsweise in Fig. 1 gezeigt.

Das Ventil 1 hat einen sich in Längsrichtung von einer runden Eintrittsöffnung 2 zu einer rechteckigen bzw. schlitzförmigen Austrittsöffnung 3 verjüngenden Mantel 4. Innerhalb des Mantels 4 ist ein erster Strömungsraum ausgebildet, der sich in Längsrichtung über die Eintrittsöffnung 2 hinaus erstreckt. Außerhalb des Mantels 4 ist ein zweiter Strömungsraum ausgebildet, der sich in Längsrichtung über die Austrittsöffnung 3 hinaus erstreckt. Der Mantel 4 weist ein elastisches Material auf, so dass insbesondere die Austrittsöffnung 3 elastisch verformbar ist. Auf diese Weise sind der erste Strömungsraum und der zweite Strömungsraum über die Austrittsöffnung 3 strömungsverbindbar.
Das Ventil 1 weist weiterhin einen rohrförmigen Ventilkörper 19 auf. Dieser umfasst den Mantel 4 radial zur Längsrichtung und begrenzt sowohl den ersten Strömungsraum als auch den zweiten Strömungsraum.
Neben der Verbindung über die Austrittsöffnung 3 sind der erste Strömungsraum und der zweite Strömungsraum über vier Bypässe 10, 12, 13, 14 mit jeweils einem Bypassventil 11, 15, 16, 17 strömungsverbindbar. Wie man erkennt, sind die Bypässe 10, 12, 13, 14 durch Öffnung 18 ausgebildet, insbesondere durch vier Öffnungen 18 im Mantel 4, die in Umfangsrichtung verteilt angeordnet sind.
Die Bypassventile 11, 15, 16, 17 sind temperaturgesteuert, insbesondere dadurch, dass diese jeweils aus einem Bimetall ausgebildet sind. Bei einer Temperatur unterhalb einer ersten Grenztemperatur schließen die Bypassventile 11, 15, 16, 17 und bei einer Temperatur oberhalb einer zweiten Grenztemperatur geben sie die Bypässe 10, 12, 13, 14 wenigstens teilweise frei. Die Grenztemperaturen sind durch Auslegung der Bimetalle definiert. Zur Regulierung kann es hierbei vorteilhaft sein, dass sich die Grenztemperaturen der Bypassventile 11, 15, 16, 17 unterscheiden, sodass die Bypässe 10, 12, 13, 14 abgestuft einzeln oder gruppenweise freigegeben werden.
Hinsichtlich der weiteren Funktionen des Ventils 1 sei auf die Ausführungen zu den Fig. 2 bis 4 verwiesen. Die Installation in einen Solarkollektorkreislauf 100 ergibt sich aus der Beschreibung zu Fig. 1.

**Bezugszeichenliste**

| | | | |
|---|---|---|---|
| 1 | Ventil | 121 | Entnahmestelle |
| 2 | Eintrittsöffnung | 122 | Einspeisestelle |
| 3 | Austrittsöffnung | 130 | Rücklaufleitung |
| 4 | Mantel | 140 | Vorlaufleitung |
| 10 | erster Bypass | | |
| 11 | erstes Bypassventil | 150 | Speiseleitung |
| 12 | zweiter Bypass | 151 | Verbraucherleitung |
| 13 | dritter Bypass | 152 | Verbraucherventil |
| 14 | vierter Bypass | | |
| 15 | zweites Bypassventil | B1 | geodätisch unterer Bereich |
| 16 | drittes Bypassventil | B2 | geodätisch oberer Bereich |
| 17 | viertes Bypassventil | dP | Differenzdruck |
| 18 | Öffnung im Mantel | F | Fluid |
| 19 | Ventilkörper | K | Fluidkreislauf |
| | | L | Längsrichtung |
| 100 | Solarkollektoreinrichtung | P1 | Druck im ersten Strömungsraum |
| 110 | Solarkollektor | P2 | Druck im zweiten Strömungsraum |
| 111 | Durchflusskanal | S1 | erster Strömungsraum |
| 112 | Eingangsöffnung | S2 | zweiter Strömungsraum |
| 113 | Ausgangsöffnung | | |
| 120 | Fluidspeicher | | |

## Patentansprüche

1. Solarkollektoreinrichtung (100), die nach dem Thermosiphon-Prinzip arbeitet, mit einem Fluidkreislauf (K) umfassend:
• einen Solarkollektor (110) mit einem Durchflusskanal (111), der eine Eingangsöffnung (112) und eine geodätisch höher als die Eingangsöffnung (112) liegende Ausgangsöffnung (113) aufweist,
• einen Fluidspeicher (120) mit einer Entnahmestelle (121) und einer geodätisch höher als die Entnahmestelle (121) angeordneten Einspeisestelle (122), wobei der Fluidspeicher (120) wenigstens teilweise geodätisch oberhalb des Solarkollektors (110) angeordnet ist,
• eine Rücklaufleitung (130), welche die Eingangsöffnung (112) des Durchflusskanals (111) mit der Entnahmestelle (121) des Fluidspeichers (120) hydraulisch verbindet,
• eine Vorlaufleitung (140), welche die Ausgangsöffnung (113) des Durchflusskanals (111) mit der Einspeisestelle (122) des Fluidspeichers (120) hydraulisch verbindet, und
• ein Ventil (1), wobei die Eintrittsöffnung (2) des Ventils (1) in Strömungsrichtung der Entnahmestelle (121) und die Austrittsöffnung (3) des Ventils (1) in Strömungsrichtung der Einspeisestelle (122) weist, **dadurch gekennzeichnet, dass** das Ventil (1) mit einem sich in Längsrichtung (L) von einer Eintrittsöffnung (2) zu einer Austrittsöffnung (3) verjüngenden Mantel (4) ausgestattet ist, wobei der Mantel (4) ein elastisches Material aufweist, sodass die Austrittsöffnung (3) elastisch verformbar ist, wobei innerhalb dessen ein erster Strömungsraum (S1) ausgebildet ist, der sich in Längsrichtung (L) über die Eintrittsöffnung (2) hinaus erstreckt, und außerhalb dessen ein zweiter Strömungsraum (S2) ausgebildet ist, der sich in Längsrichtung (L) über die Austrittsöffnung (3) hinaus erstreckt, wobei der erste Strömungsraum (S1) und der zweite Strömungsraum (S2) über die Austrittsöffnung (3) sowie wenigstens einen ersten Bypass (10) mit einem ersten Bypassventil (11) strömungsverbindbar sind, wobei das erste Bypassventil (11) temperaturgesteuert ist.

2. Solarkollektoreinrichtung (100) nach Anspruch 1,
**dadurch gekennzeichnet, dass** das Ventil (1) in der Durchflussleitung (111), der Vorlaufleitung (140) oder der Rücklaufleitung (130) angeordnet ist.

3. Solarkollektoreinrichtung (100) nach einem der vorhergehenden Ansprüche, wobei das Ventil (1)
**dadurch gekennzeichnet ist, dass** das erste Bypassventil (11) ein Bimetall ist, das den ersten Bypass (10) bei einer Temperatur unterhalb einer ersten Grenztemperatur verschließt, und das den ersten Bypass (10) bei einer Temperatur oberhalb einer zweiten Grenztemperatur wenigstens teilweise freigibt.

4. Solarkollektoreinrichtung (100) nach Anspruch 3, wobei das Ventil (1)
**dadurch gekennzeichnet ist, dass** die Grenztemperaturen durch Auslegung des Bimetalls definiert sind.

5. Solarkollektoreinrichtung (100) nach einem der vorhergehenden Ansprüche, wobei das Ventil (1)
**dadurch gekennzeichnet ist, dass** der erste Bypass (10) durch eine Öffnung (18) im Mantel (4) ausgebildet ist.

6. Solarkollektoreinrichtung (100) nach einem der vorhergehenden Ansprüche, wobei das Ventil (1)
**dadurch gekennzeichnet ist, dass** der erste Strömungsraum (S1) und der zweite Strömungsraum (S2) über zwei bis zehn Bypässe (10, 12, 13, 14) strömungsverbunden sind, wobei in jedem dieser Bypässe (10, 12, 13, 14) ein Bypassventil (11, 15, 16, 17) angeordnet ist.

## Claims

1. Solar collector device (100) which operates according to the thermosiphon principle, with a fluid circuit (K) comprising:
• a solar collector (110) with a throughflow duct (111) which has an entry opening (112) and an exit opening (113) which is situated geodetically higher than the entry opening (112) ,
• a fluid storage unit (120) with an extraction point (121) and an infeed point (122) which is arranged geodetically higher than the extraction point (121), wherein the fluid storage unit (120) is arranged at least partially geodetically above the solar collector (110),
• a return line (130) which hydraulically connects the entry opening (112) of the throughflow duct (111) to the extraction point (121) of the fluid storage unit (120),
• a supply line (140) which hydraulically connects the exit opening (113) of the throughflow duct (111) to the infeed point (122) of the fluid storage unit (120), and
• a valve (1),
wherein
the inlet opening (2) of the valve (1) faces the flow direction of the extraction point (121) and the outlet opening (3) of the valve (1) faces the flow direction of the infeed point (122), **characterized in that** the valve (1) is provided with a casing (4) which narrows from an inlet opening (2) to an outlet opening (3) in the longitudinal direction (L), wherein the casing (4) has an elastic material, so that the outlet opening (3) is able to be deformed elastically, wherein inside said casing, a first flow space (S1) which extends beyond the inlet opening (2) in the longitudinal direction (L) is formed, and outside said casing, a second flow space (S2) which extends beyond the outlet opening (3) in the longitudinal direction (L) is formed, wherein the first flow space (S1) and the second flow space (S2) are able to be flow-connected via the outlet opening (3) and at least one first bypass (10) with a first bypass valve (11), wherein the first bypass valve (11) is temperature-controlled.

2. Solar collector device (100) according to Claim 1, **characterized in that** the valve (1) is arranged in the throughflow line (111), the supply line (140) or the return line (130).

3. Solar collector device (100) according to either of the preceding claims, wherein the valve (1) is **characterized in that** the first bypass valve (11) is a bimetal which closes off the first bypass (10) at a temperature below a first limit temperature and which at least partially opens up the first bypass (10) at a temperature above a second limit temperature.

4. Solar collector device (100) according to Claim 3, wherein the valve (1)
is **characterized in that** the limit temperatures are defined by the design of the bimetal.

5. Solar collector device (100) according to one of the preceding claims, wherein the valve (1) is **characterized in that** the first bypass (10) is formed by an opening (18) in the casing (4).

6. Solar collector device (100) according to one of the preceding claims, wherein the valve (1) is **characterized in that** the first flow space (S1) and the second flow space (S2) are flow-connected via two to ten bypasses (10, 12, 13, 14), wherein one bypass valve (11, 15, 16, 17) is arranged in each of these bypasses (10, 12, 13, 14).

## Revendications

1. Dispositif (100) de collecteur solaire fonctionnant selon le principe du thermosiphon et présentant un circuit de fluide (K) qui comprend :
un collecteur solaire (110) traversé par un canal (111) qui présente une ouverture d'entrée (112) et une ouverture de sortie (113) située à une altitude plus élevée que l'ouverture d'entrée (112),
un réservoir (120) de fluide doté d'un emplacement de prélèvement (121) et d'un emplacement d'alimentation (122) disposé à une altitude plus élevée que l'emplacement de prélèvement (121), le réservoir (120) de fluide étant disposé au moins en partie à une altitude plus élevée que le collecteur solaire (110),
un conduit de retour (130) qui relie hydrauliquement l'ouverture d'entrée (112) du canal (111) à l'emplacement de prélèvement (121) du réservoir (120) de fluide,
un conduit de départ (140) qui relie hydrauliquement l'ouverture de sortie (113) du canal (111) à l'emplacement d'alimentation (122) du réservoir (120) de fluide,
une soupape (1), l'ouverture d'entrée (2) de la soupape (1) étant orientée dans la direction d'écoulement de l'emplacement de prélèvement (121) et l'ouverture de sortie (3) de la soupape (1) étant orientée dans la direction d'écoulement de l'emplacement d'alimentation (122),
**caractérisé en ce que**
la soupape (1) est dotée d'une enveloppe (4) qui se rétrécit dans le sens de la longueur (L) entre une ouverture d'entrée (2) et une ouverture d'entrée (3),
l'enveloppe (4) présentant un matériau élastique de telle sorte que l'ouverture d'entrée (3) puisse être déformée élastiquement,
un premier espace d'écoulement (S1) y étant formé à l'intérieur et s'étendant dans le sens de la longueur (L) hors de l'ouverture d'entrée (3) et un deuxième espace d'écoulement (S2) étant formé à l'extérieur de l'ouverture de sortie et s'étendant dans le sens de la longueur (L) hors de l'ouverture d'entrée (3), le premier espace d'écoulement (S1) et le deuxième espace d'écoulement (S2) pouvant être reliés à écoulement par l'intermédiaire de l'ouverture d'entrée (3) ainsi que d'au moins une première dérivation (10) dotée d'une première soupape de dérivation (11), la première soupape de dérivation (11) étant asservie à la température.

2. Dispositif (100) de collecteur solaire selon la revendication 1, **caractérisé en ce que** la soupape (1) est disposée dans le conduit de traversée (111), le conduit de départ (140) ou le conduit de retour (130).

3. Dispositif (100) de collecteur solaire selon l'une des revendications précédentes, dans lequel la soupape (1) est **caractérisée en ce que** la première soupape de dérivation (11) est un bimétal qui ferme la première dérivation (10) à une température inférieure à une première température limite et qui libère au moins partiellement la première dérivation (10) lorsque la température est supérieure à une deuxième température limite.

4. Dispositif (100) de collecteur solaire selon la revendication 3, dans lequel la soupape (1) est **caractérisée en ce que** les températures limites sont définies par la configuration du bimétal.

5. Dispositif (100) de collecteur solaire selon l'une des revendications précédentes, dans lequel la soupape (1) est **caractérisée en ce que** la première dérivation (10) est formée par une ouverture (18) ménagée dans l'enveloppe (4).

6. Dispositif (100) de collecteur solaire selon l'une des revendications précédentes, dans lequel la soupape (1) est **caractérisée en ce que** le premier espace d'écoulement (S1) et le deuxième espace d'écoulement (S2) sont reliés à écoulement par deux à dix dérivations (10, 12, 13, 14), une soupape de dérivation (11, 15, 16, 17) étant disposée dans chacune de ces dérivations (10, 12, 13, 14).
